# EUROPEAN PATENT APPLICATION

(11) **EP 3 355 196 A1**
(43) Date of publication of application: **01.08.2018**
(21) Application number: 17305089.9
(22) Date of filing: 27.01.2017
(51) Int. Cl.: G06F 11/10

(54) **FPGA AND METHOD OF OPERATION**

(71) Applicant: MENTA, 34000 Montpellier (FR)
(72) Inventor: ROUGE, Laurent, 34920 LE CRES (FR); EYDOUX, Julien, 34090 MONTPELLIER (FR)
(74) Representative: Bell, Mark

(57) **Abstract**

The programmable elements of an FPGA are configured by loading a programming bitstream into program storage elements, associated with additional storage elements containing error detection values calculated on the basis of the programming bitstream. An error checking unit generates its own digest of the programming bitstream as present in the program storage elements as required, and compares the result with the error detection values. In a case where the values differ, an error signal is emitted. Matrixed structures for loading the FPGA with programming bitstream and error detection values on one hand, and reading out error signals on the other are provided.

## Description

### Field of the invention

The present invention relates to Programmable Logic Devices (PLD), and more particularly to Field Programmable Gate Array (FPGA) devices.

### Background of the invention

FPGAs are a type of Programmable Logic Device. They are generally based on a standard programmable logic block, a large number of which are arranged together to implement various functions.

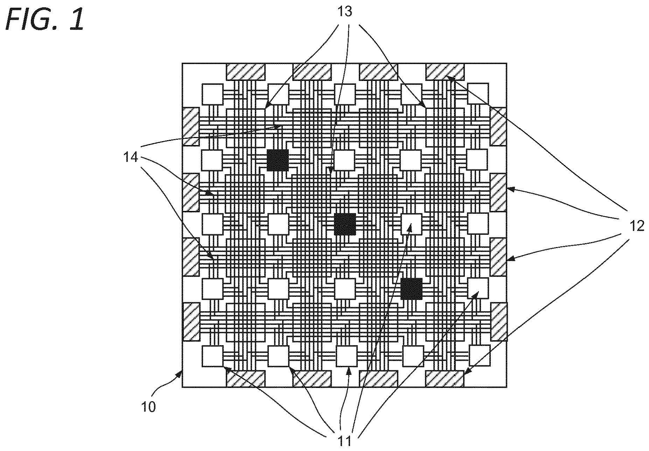

Figure 1 shows schematically an example of an FPGA system as known in the state of the art.

As shown in figure 1, an FPGA chip 10 comprises a number of logic blocks11, for example as described above. The chip also comprises a number of input/output ports 12. Connecting these logic blocks 11 and input/output ports 12 are a number of tracks 14. At junction points of these tracks are provided and number of programmable routing areas 13, which may also be referred to as switch boxes. In these programmable routing areas there are provided switches which can selectively connect any pair of intersecting tracks, under the control of a logical value stored in a bit cell memory connected with each switch. The bit cell memory values are set at system start up from a non volatile memory. Accordingly, by setting the values in the switch memories as required, any connections of any logic block can be coupled to those of any other logic block, or any input/output port 12. Similarly any one input/output port may be connected to any other input/output port. Thus, by properly configuring the memory units to define the operation of each logic block, and the switch memories 13 to establish appropriate connections between the logic blocks, any desired functionality can be implemented.

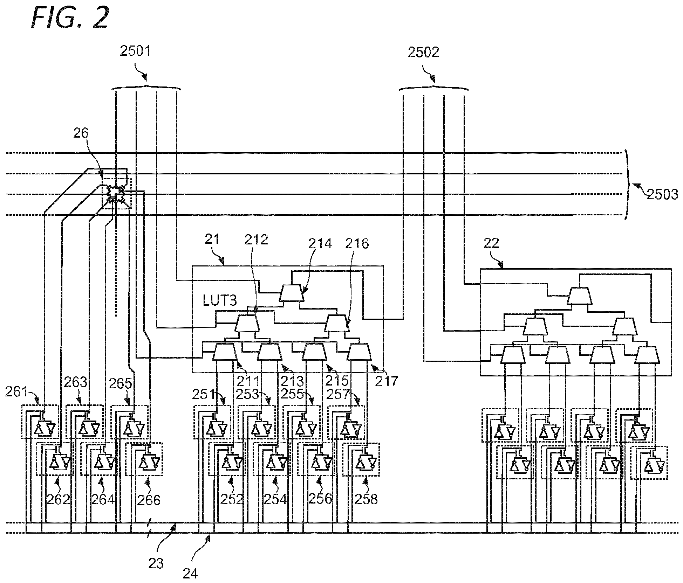

Figure 2 shows further detail of elements of an FPGA system as known in the state of the art.

The elements shown in figure 2 constitute a representative example of a partial implementation of parts of the functionality described above with respect to figure 1.

As shown in figure 2, there is provided a first Look Up Table (LUT) 21, and a second Look Up Table (LUT) 22, and a number of further LUTs (not shown). Each LUT thus corresponds to a logic block 11 as described in figure 1, although in real FPGA implementations each logic block will generally comprise more than one LUT, and possibly other circuits extending or enhancing the functionality of the logic block, such that logic block of different types may be defined with characteristic functionality. The first LUT 21 comprises seven, two input multiplexers 211, 212, 213, 214, 215, 216, 217 respectively. The second LUT and further LUTs are configured similarly. These multiplexers are arranged in a cascading manner with three rows so as to constitute an 8 input multiplexer, the output of which constitutes the output of the LUT. The first row of multiplexers (211, 213, 215 and 217) in each cascade arrangement both have a total of eight inputs. These eight inputs constitute the programming inputs of the first LUT 21. The selection inputs of each row are ganged together, to constitute the three data inputs of the LUT. The data inputs and data output of the first LUT are connected to a set of tracks 2501, 2502. The inputs and outputs of the second and further LUTs are connected correspondingly to a network of further tracks (not shown). Conventionally a LUT with 3 data inputs in this manner is referred to as a "LUT3". This is generally termed the LUT size, and the number of LUTs of each size required to implement a particular operation is a basic element in designing an FPGA to implement that operation. Each of the eight programming inputs of the first LUT 21 is connected to a respective bit cell memory 251, 252, 253, 254, 255, 256, 257, 258. Corresponding bit cells provide the configuration inputs of the second LUT 22, and the other LUTs provided in the system (not shown). In operation, these bit cell memories 251, 252, 253, 254, 255, 256, 257, 258 provide a constant predetermined logical value to each of the eight programming inputs of each LUT. The content of each bit cell memory is shown schematically as comprising a latch built of two inverters, each receiving the output of the other, with a transistor switch, switched by a respective word line, provided to enable the selective output of the value on the output of one of the inverters in the latch to a bit line connected to a respective configuration input of the LUT 217, and also to a respective data line by means of which the value of the latch may be set. The bit line of each bit cell memory 251, 252, 253, 254, 255, 256, 257, 258 is connected to a selection bus 23, and the word line of each bit cell memory 251, 252, 253, 254, 255, 256, 257, 258 is connected to a data bus 24. During an initiation phase for the circuit, each bit cell memory 251, 252, 253, 254, 255, 256, 257, 258 is addressed in turn, and the desired value set to the latch in question. The logical behaviour of the LUT in response to any binary value on its three data inputs can thus be defined as required. This is the underlying basic concept of FPGA technology. It will be appreciated however that the functions that a single logic block comprising two LUT3s can implement are limited, however by interconnecting a number of suitably configured LUTs as described above, any arbitrary combinatorial function can be implemented. This interconnection is achieved through a programmable interconnection of the data channels 2501, 2502, and further channels (not shown) carrying data from other LUTs. As shown whilst channels 2501, 2502 are arranged vertically, there is provided a further channel 2503 intersecting channels 2501, 2502. At the intersection of respective lines of channels 2501 and 2503 is provided a programmable switching unit 26. Considering that the intersection of the two lines constitutes a total of four connections at the switching unit, the switching unit comprises 6 transistor switches, arranged to make or break a connection between any two of these four connections. Each of these transistor switches is set to be open or closed by a value received from a respective bit cell memory 261, 262, 263, 264, 265, 266. Further such programmable switching units, with corresponding bit cell memories are provided at many or all track intersections (not shown). These bit cell memories 261, 262, 263, 264, 265, 266 as shown are identical to the bit cell memories 251, 252, 253, 254, 255, 256, 257, 258, and connected to the same selection bus 23 and data bus 24, so that during an initiation phase for the circuit, both the LUT bit cell memories and switch bit cell memories may be addressed in turn, and the desired value set to the latch in question, so that the behaviour of each LUT, and its connections to any other LUT may be configured as required.

WO2012/123243 A1, US7463056 B1, US6021513 A, US5432441 A, US8091001 B2, US5675589 A, and US5027355 A describe certain aspects of the foregoing.

The article entitled "Bridging the Gap between Soft and Hard eFPGA Design", by Victor Olubunmi Aken'Ova chapter 3.22 available from https://www.ece.ubc.ca/-lemieux/publications/akenova-masc2005.pdf provides further background information.

While the approach described is highly flexible, it will be appreciated that the interconnection tracks between LUTs and the bit and word lines of the bit cell memories take a significant amount of space. Even in the highly simplified arrangement of figure 2 the number of lines shown is substantial, and this quickly becomes onerous in any real implementation. This is further exacerbated by the need to implement testing functionality in the circuit, provided to confirm proper behaviour when the device is manufactured, which will require the addition of still further features.

One problem particular to this approach is the dependency for correct implementation of the desired logical function on the correct values being present in the memory devices. Even a single incorrect value can entirely invalidate the output of the device, and there are various mechanisms which may cause the corruption of the stored values.

It is known to include error correction code values, for example on the basis of an Cyclic Redundancy Check (CRC) algorithm, so that the integrity of the bitstream between the non volatile memory cells where the bitstream is stored and the FPGA programming system can be determined. Thus during programming the system can check the correction code values step by step to confirm each bitstream value before loading it to the corresponding memory cell. Once programming is complete however, and the FPGA in operation, there is no further possibility of verification.

It is desirable to provide improved mechanisms for validating programming values.

### Summary of the invention

In accordance with the present invention in a first aspect there is provided a Field Programmable Gate Array capable of implementing a logic function. The Field Programmable Gate Array comprises a plurality programmable elements, and a plurality of program storage elements, each programmable element having at least one programming input coupled to an output of a respective program storage element, such that a value stored in each program storage element determines the operation of the respective programmable element. The Field Programmable Gate Array is characterised by further comprising one or more check value storage elements, and an error detecting code calculator. The output of each storage element may be further coupled to the error detecting code calculator, whereby the error detecting code calculator is configured to calculate an error code in accordance with a predefined error detecting algorithm, and to compare the error code with a value stored in the check value storage elements. In a case where the error code does not correspond to the value stored in the check value storage elements in a predefined manner, the error detecting code calculator may be further adapted to issue an error signal.

This approach makes it possible to detect an error in the configuration bitstream during FPGA operation, without interrupting or otherwise affecting operational processing. It is not necessary to read the bitstream back out of the program storage elements for validation.

In a development of the first aspect, the program storage elements and check value storage elements may be flip-flops.

In a development of the first aspect, the program storage elements and the check value storage elements may be arranged to form a shift register.

In a further development of the first aspect, the predefined error detecting algorithm may be any one of a parity value, checksum, cyclic redundancy check, cryptographic hash function or error correcting code.

In a further development of the first aspect, the predefined manner of correspondence may be identity of the error code with the value stored in the check value storage elements.

In a further development of the first aspect, the plurality programmable elements and associated plurality of program storage elements and program storage elements, check value storage elements and error detecting code calculator may belong a functional sub unit of the Field Programmable Gate Array, and the Field Programmable Gate Array may comprise a further plurality of functional sub units, each further functional sub unit comprising respective program storage elements and program storage elements, check value storage elements and error detecting code calculator.

In a further development of the first aspect, the signals output by the error detecting code calculator of each functional sub unit may be combined by a logical OR function, such that the output of the logical OR function indicates whether any one of the error detecting code calculators issues an error signal.

In a further development of the first aspect, the functional sub units whose outputs are combined by a logical OR function may belong to a first functional grouping, and the Field Programmable Gate Array may comprises a further plurality of functional groupings of functional sub units, wherein the functional sub units of each functional grouping are arranged linearly within their respective functional grouping, and the linear arrangements of functional sub units in each functional grouping are parallel to each other, and furthermore wherein a respective functional sub unit of each functional grouping is aligned with a corresponding functional sub unit of each other functional grouping to define a plurality of secondary groupings with the functional sub units arranged in a matrix with each functional sub unit belonging to a respective functional grouping and secondary functional grouping, and wherein the signals output by the error detecting code calculator of each functional sub unit are further combined by a second logical OR function with the signal output by the error detecting code calculator of each corresponding respective functional sub unit in each of the secondary functional groupings, such that the output of the second logical OR function indicates whether any one of the error detecting code calculators in a respective secondary functional grouping issues an error signal, whereby a first logical OR value for a particular functional grouping and whereby a second logical OR value for a particular secondary functional grouping unambiguously indicates the functional unit belonging to that respective functional grouping and whereby that particular secondary functional grouping as the source of the error signal.

In accordance with the present invention in a second aspect there may be provided a method of operating a Field Programmable Gate Array capable of implementing a logic function, where the Field Programmable Gate Array comprises a plurality of programmable elements and a plurality of program storage elements, each programmable element having at least one programming input coupled to an output of a respective program storage element, such that a value stored in each program storage element determines the operation of the respective programmable element. The method comprises the steps of:
obtaining a programme bitstream of values whereby loading a respective value from the programme bitstream into a respective program storage element in a predetermined sequence will determine the operation of the respective programmable element so as to implement a predetermined logic function,
determining one or more check values for the bitstream on the basis of a predetermined error detecting algorithm,
adding the check values to the bitstream to obtain an augmented bitstream,
loading the augmented bitstream into a plurality of storage elements, whereby the program storage elements receive the respective values of the programme bitstream, and a further one or more check value storage elements receive the respective check values and
at a predetermined time, applying the predetermined error detecting algorithm to the contents of the plurality of program storage elements to obtain an error code, and comparing the error code to the value stored in the check value storage elements, and in a case where the error code does not correspond to the value stored in the check value storage elements in a predefined manner, issuing an error signal.

In a development of the second aspect, the predefined error detecting algorithm may be any one of a parity value, checksum, cyclic redundancy check, cryptographic hash function or error correcting code.

In a further development of the second aspect, the predefined manner of correspondence may be identity of the error code with the value stored in the check value storage elements.

In a further development of the second aspect, the Field Programmable Gate Array may comprise a plurality of functional sub-units, and the programme bitstream may be associated with a first functional sub-unit, the further functional sub-units being associated with further respective programme bitstreams and corresponding respective check values, the method comprising the further step of combining the error signal output by each functional sub-unit by a logical OR function, such that the output of the logical OR function indicates whether any one of the functional sub-units issues an error signal.

In a further development of the second aspect, the functional sub units whose outputs are combined by a logical OR function may belong to a first functional grouping, and the Field Programmable Gate Array may comprise a further plurality of functional groupings of functional sub units, wherein the functional sub units of each functional grouping are arranged linearly within their respective functional grouping, and the linear arrangements of functional sub units in each functional grouping are parallel to each other, and furthermore wherein a respective functional sub unit of each functional grouping is aligned with a corresponding functional sub unit of each other functional grouping to define a plurality of secondary groupings with the functional sub units are arranged in a matrix with each functional sub unit belonging to a respective functional grouping and secondary functional grouping, and wherein the signals output by the error detecting code calculator of each functional sub unit are further combined by a second logical OR function with the signal output by the error detecting code calculator of each corresponding respective functional sub unit in each of secondary functional groupings, such that the output of the second logical OR function indicates whether any one of the error detecting code calculators in a respective secondary functional grouping issues an error signal. In this case the method comprises the further step of identifying whichever functional sub-unit is associated with both the first logical OR function output and the second logical OR function output as the source of the error signal.

In accordance with the present invention in a third aspect there may be provided a computer program adapted to implement the steps of the second aspect.

In accordance with the present invention in a fourth aspect there may be provided a computer readable medium incorporating the computer program of the third aspect.

### Brief Description of the Drawings

The above and other advantages of the present invention will now be described with reference to the accompanying drawings, in which:
- Figure 1: shows schematically an example of an FPGA system as known in the state of the art;
- Figure 2: shows further detail of elements of an FPGA system as known in the state of the art;
- Figure 3: shows elements of an FPGA system in accordance with an embodiment;
- Figure 4: shows elements of an FPGA system in accordance with an embodiment;
- Figure 5: shows a further configuration for the configuration of FPGA circuitry in accordance with an embodiment;
- Figure 6: shows a still further configuration for the configuration of FPGA circuitry in accordance with an embodiment;
- Figure 7: shows a method of operating an FPGA in accordance with an embodiment; and
- Figure 8: shows a generic computing system suitable for implementation of embodiments of the invention.

### Detailed description

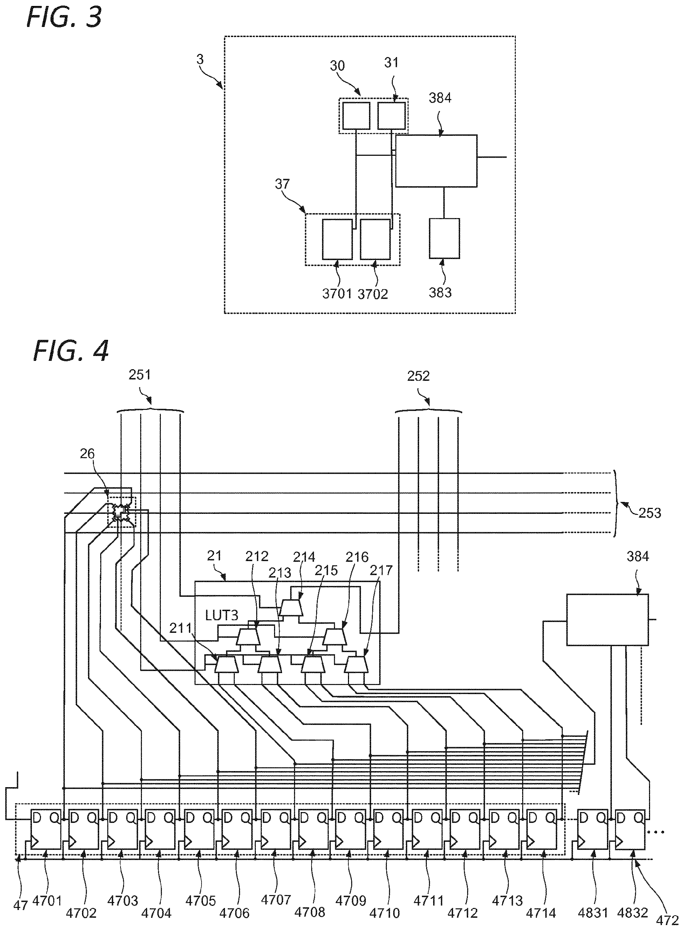

Figure 3 shows elements of an FPGA system in accordance with an embodiment.

In particular, as shown in figure 3 there is provided a Field Programmable Gate Array 3 capable of implementing a logic function. The Field Programmable Gate Array comprises a plurality of programmable elements 30, 31, and a plurality of program storage elements 37 shown comprising elements 3701, 3702, where each programmable element 30, 31 has at least one programming input coupled to an output of a respective program storage element 3701, 3702, such that a value stored in each program storage element 3701, 3702, determines the operation of the respective programmable element 30, 31.

The program storage elements 3701, 3702 may be latches, flip-flops, memory cells or any other type of data storage element.

Figure 3 shows only two program storage elements 3701, 3702 for the sake of simplicity, however any number of such program storage elements may be provided depending on the required functionality of the FPGA.

The LUTs 21 and 22, and the programmable switch 26 are examples of programmable elements as described with reference to figure 2. Other programmable elements may include input/output terminals, application specific logic blocks, and any other part of the FPGA device whose operational behaviour may be configured by setting a stored value.

Furthermore, the Field Programmable Gate Array comprises one or more check value storage elements 383, and an error detecting code calculator 384. The output of each storage element 3701, 3702 is coupled to the error detecting code calculator, whereby the error detecting code calculator is configured to calculate an error code in accordance with a predefined error detecting algorithm.

The check value storage elements 383 may be latches, flip-flops, memory cells or any other type of data storage element.

Figure 3 shows only one check value storage element 383 for the sake of simplicity, however any number of the number of program storage elements to be validated, and the selected error detecting algorithm as discussed further below.

The predefined error detecting algorithm may be any suitable means of obtaining a condensed representation of the content of the program storage elements, and may include for example a parity value, a checksum, cyclic redundancy check, cryptographic hash function or error correcting code.

The error detecting code calculator is further configured to compare the resulting error code with the value stored in the check value storage elements.

The predefined manner of correspondence may reflect any suitable basis of comparison. By way of example, the manner of correspondence may be an identity of the error code with the value stored in the check value storage elements, or may otherwise be any predefined logical, arithmetic or other relationship.

In a case where the error code does not correspond to the value stored in the check value storage elements in a predefined manner, the error detecting code calculator 384 is further adapted to issue an error signal.

By this means, it becomes possible at any time to refer to the output of the error detecting code calculator to obtain confirmation that the current configuration of the programmable elements is correct, and thereby validate the outputs of the FPGAs as being the result of the intended configuration. It may be noted that the device may still produce errors for example due to an SEU event in the operational parts of the FPGA. Errors of this kind are not due to an error in configuration and as such lie outside the scope of the present disclosure.

Figure 4 shows elements of an FPGA system in accordance with an embodiment.

The elements shown in figure 4 constitute a representative example of a partial implementation of parts of the functionality described above with respect to figure 1 in accordance with an embodiment of the present invention.

As shown in figure 4, there is provided a first Look Up Table (LUT) 21 and a number of further LUTs (not shown). The first LUT 21 comprises seven two-input multiplexers 211, 212, 213, 214, 215, 216, 217 respectively. The further LUTs may be configured similarly. These multiplexers are arranged in a cascading manner with three rows so as to constitute an eight-input multiplexer, the output of which constitutes the output of the LUT. The first row of multiplexers (211, 213, 215 and 217) in each cascade arrangement both have a total of eight inputs. These eight inputs constitute the programming inputs of the first LUT 21. The selection inputs of each row are ganged together, to constitute the three data inputs of the LUT. The data inputs and data output of the first LUT are connected to a set of tracks 2501, 2502. The inputs and outputs of the second and further LUTs are connected correspondingly to a network of further tracks (not shown). Conventionally a LUT with 3 data inputs in this manner is referred to as a "LUT3".

In accordance with this embodiment, each of the eight programming inputs of the first LUT 21 are connected respectively to the Q terminal of a D flip-flop 4707, 4708, 4709, 4710, 4711, 4712, 4713, 4714.

Similarly, the configuration inputs of the second LUT 22 and other LUTs provided in the system (not shown) are provided by further D flip-flops (not shown). These flip-flops are arranged with the flip-flops 4707, 4708, 4709, 4710, 4711, 4712, 4713, 4714 to constitute a programming shift register 47, by connecting the output Q of each flip-flop to the input D of the next, and ganging together the clock inputs of each flip-flop in a single clock line 472. In operation, these memory devices provide a constant predetermined logical value to each of the eight programming inputs of each LUT, in the same way as the SRAM devices described with reference to figure 2.

Thus in this embodiment, the program storage elements and the check value storage elements are flip-flops. Furthermore in this embodiment, the program storage elements are arranged to form a shift register. While the embodiment of figure 4 focuses on a small number of programmable elements, and corresponding program storage elements for the sake of simplicity, it will be appreciated that any number of programmable elements, and corresponding program storage elements may be provided. It will be appreciated that the program storage elements and/or the check value storage elements may be comprised of flip-flops without these necessarily being arranged in a shift register configuration.

Additionally, there are provided two additional flip-flops 4831 and 4832, which constitute the check value storage elements 383. In any implementation, the number of check value storage elements will be dictated by the number of program storage elements to be validated, and the selected error detecting algorithm.

Thus in this embodiment, the check value storage elements are also flip-flops, and the check value storage elements are arranged to form a shift register.

As shown, the configuration further comprises an error detecting code calculator 384, receiving the values output by each of the flip-flops 4707, 4708, 4709, 4710, 4711, 4712, 4713, 4714, and additionally from the two additional flip-flops 4831 and 4832.

During an initiation phase for the circuit, a codeword corresponding to the desired final value of each flip-flop in the programming shift register is input to the first flip-flop 4701 in the programming shift register bit by bit, and clocked along the programming shift register one bit at a time until the first bit reaches the last flip-flop, and the first flip-flop receives its final value.

The error detecting code calculator operates on the values received from the programming flip-flops and from the check value storage elements as described above. By this means, it becomes possible at any time to refer to the output of the error detecting code calculator to obtain confirmation that the current configuration of the programmable elements is correct, and thereby validate the outputs of the FPGAs as being the proper result of the intended configuration.

The system of figure 4 implements an interconnection mechanism similar to that described with respect to figure 2 above. In accordance with this embodiment however, each transistor switch of the programmable switch unit 26 is set to be either open or closed by a value received from a respective flip-flop 4701, 4702, 4703, 4704, 4705, 4706 belonging to the programming shift register 47. Further such programmable switching units, with corresponding flip-flop devices are provided at many or all track intersections (not shown). Accordingly, during an initiation phase for the circuit a bitstream corresponding to the desired final value of each flip-flop in the programming shift register to implement whatever logic function is required of the FPGA is input to the first flip-flop 4701 in the programming shift register bit by bit, and clocked along the programming shift register one bit at a time until the first bit reaches the last flip-flop, and the first flip-flop receives its final value, thus defining the values of the routing switches and the LUT configuration inputs in one go.

In this embodiment, the program storage elements and check value storage elements are arranged to form a single shift register. This means that a single datastream comprising both error detection values and programme values may be clocked into the system at start-up.

In other embodiments, separate programming shift registers on one hand and error detection memory on the other may be provided, which may or may not be in the form of a shift register (as shown in figure 3 for example).

Although as shown in figure 4 the error detection storage elements form a discrete series of elements in the shift register, they may be interspersed with programme storage elements in any sequence that may be convenient.

Replacing SRAM memory cells with D flip-flops implies an increase in transistor count, and accordingly goes against standard IC design imperatives.

By adopting flip-flops to control the routing switches and LUT configuration inputs, it becomes possible to implement scan chain test technique without adding extra flip-flops specifically for testing purposes. This not only offsets the increase in transistor count mentioned above, but further simplifies the chip design in particular with regard to the routing and control of the test components.

Furthermore, by removing the need for addressing and data busses for a large number of SRAM cells, it is possible to economize substantially in terms of chip area usually set aside for these purposes.

While figure 4 shows a single programming shift register 47, it will be appreciated that as the proposed mechanism is scaled to incorporate more LUTs and programmable switching units, it may become desirable to implement multiple or multidimensional programming shift registers, which may incorporate error detection storage elements in various configurations.

Accordingly, the programming shift register for example as described with reference to figure 4 may be one of a plurality of such programming shift registers configured to supply different parts of the Field Programmable Gate Array.

Such a plurality of programming shift registers may be configured to be loaded with the values in parallel or in series.

The skilled person will appreciate that while the system of figure 4 has been highly simplified, real systems will be considerably more complex without departing from the principles described herein. In particular, each logic block may comprise more than one LUT, and may further comprise additional logic for example to support extended functionality, or to introduce sequential control. A number of such logic blocks may be arranged together in groups.

Referring back to fig. 1, it is apparent that while the tracks 14 that provide connectivity between tiles in an operational mode are shown schematically, the address and data busses 23 and 24 are not shown, and in a real device will contribute very substantially to the surface area of the device. The programming shift register arrangement of figure 4 addresses this issue, since it becomes possible to load the bitstream for a large number of memory devices into the programming shift register, without needing to individually address each memory cell. This is both simpler in operation, and less demanding in terms of surface area as concerns addressing and bus tracks. It will be appreciated that it may nevertheless not be desirable to provide a single programming shift register incorporating every configuration cell and error detection storage element for an entire FPGA device, since such a programming shift register may become unmanageably long, with implications for clock management, power consumption and the like. It is meanwhile possible to adopt an approach based on multiple programming shift registers, which each programming shift register managing the configuration settings and/or error detection storage elements for a particular part of the chip. The first flip-flop in each such programming shift register, or group of programming shift registers, can be addressed in a similar manner to the individual memory cells of figure 2, or otherwise. The choice of the length of each programming shift register then becomes a compromise between longer programming shift registers with simpler configuration bit stream distribution on one hand, and shorter programming shift registers with more complex configuration bitstream distribution on the other, which may imply wider busses and or more complex addressing. The optimal compromise in any given case will depend on the semiconductor technology in use, and various characteristics of the FPGA circuit itself.

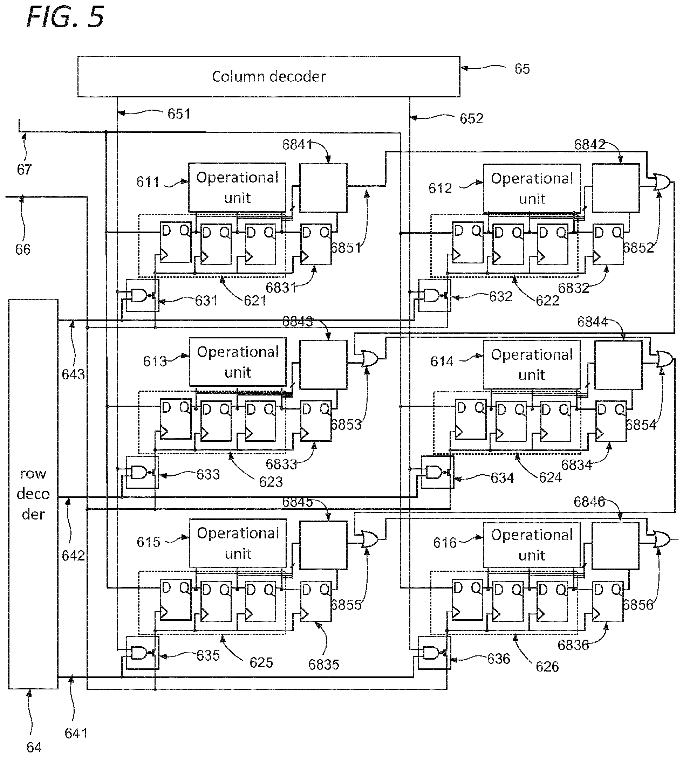

Figure 5 shows a further configuration for the configuration of FPGA circuitry in accordance with an embodiment. As shown in figure 5, the FPGA is structured around a matrix of functional sub-units each comprising a respective logic block 611, 612, 613, 614, 615, 616. Each logic block is provided with a respective programming shift register 621, 622, 623, 624, 625, 626. As shown, the six programming shift registers 621, 622, 623, 624, 625, 626 each comprise three flip-flops, providing configuration values for their associated logic block. As shown each logic block is further associated with a respective error detection storage element 6831, 6832, 6833, 6834, 6835, 6836, each situated at the end of a respective programming shift register 621, 622, 623, 624, 625, 626. As shown each logic block is further associated with a respective error detecting code calculator 6841, 6842, 6843, 6844, 6845, 6846 which operates on the values received from the programming flip-flops and from the check value storage elements as described above.

The first flip-flop of each programming shift register receives its input on an input line 67, which is coupled in common to the D input of the first flip-flop of each programming shift register.

All of the flip-flops in each programming shift register have their clock inputs in common.

A single clock distribution network 66 is coupled to the clock line of each programming shift register by a respective clock gate 631, 632, 633, 634, 635, 636. These clock gates as shown each have a row select and a column select input, whereby concurrent logical highs on both inputs close a switch connecting the clock line of the respective programming shift register to the clock distribution network 66 to receive clock pulses.

As shown there are 2 column select lines 651 and 652, and 3 row lines 641, 642, 643. The select inputs of each clock gate is connected to a respectively different combination of column select line and row select line, so that by setting a particular column select line and row select line to a logical high, the single clock gate having its row select input and a column select input connected to those two select lines will be activated.

Since data values from the input line will only be propagated through a programming shift register when that shift register receives clock inputs, by directing the clock signal to one selected programming shift register it is possible to selectively program any programming shift register with a single input line 67.

The column select lines 651, 652 are controlled by a column decoder 65, and the row select lines 641, 642, 643 are controlled by a row decoder 64. These decoders receive instructions coordinated with the values on the input line 67 to address the value on the input line 67 to whichever programming shift register it is intended for. As such, during an initialization phase the circuit of figure 5 will receive not only the configuration bitstream on line 67 and the clock on line 66, but also an addressing bitstream at the decoders 64 and 65.

The fact that only the subset of flip-flops, i.e. those belonging to the logic blocks being programmed at a given time are clocked, results in significant reduction in power consumption.

It will be appreciated that in real systems implemented in an FPGA, many logic blocks will be configured identically to implement common functions, and accordingly the same error detection values. It is an advantage of the present invention that it may be possible to enable the clock gate of more than one programming shift register so that the same configuration and error detection values can be clocked into several programming shift registers in parallel. This reduces the initialization time of the FPGA, and reduces power consumption.

As shown, the three programming shift registers have only three flip-flops, however it will be appreciated that in working implementations the programming shift registers will generally be significantly longer. Working implementations will also generally comprise more than six logic blocks and correspondingly more than six programming shift registers. As discussed above, the number of error detection values required will then depend on the number of programming flip-flop values to be validated, and the error detection algorithm applied. The programming shift registers are shown as all comprising the same number of flip-flops, however since each programming shift register is clocked independently the approach of figure 5 is equally well suited to arrangements in which each programming shift register may comprise any number of flip-flops.

It will be appreciated that in this or any embodiment comprising multiple error detecting code calculators, different error detection algorithms may be implemented by respective error detecting code calculators. For example, regions of the FPGA performing especially critical operations may be assigned more extensive error detecting algorithms.

This addressing functionality may also be implemented by means of standard integrated clock gating cells, or otherwise. Certain embodiments may provide for common enablement of a group of or all programming shift registers together with individual addressing.

By implementing a direct structural correspondence between the programming shift register architecture and the layout of the logic blocks, a structured approach to the generation of the configuration bitstream is imposed, which is likely to facilitate programming of the FPGA.

It will be appreciated that a given FPGA may be subdivided into sections which are programmed independently, and that combinations of various programming shift register architectures for example as described with regard to figure 5 are possible in the same FPGA with respect to different parts thereof.

As such, the Field Programmable Gate Array plurality of functional sub units, each functional sub unit comprising respective program storage elements and program storage elements, check value storage elements and error detecting code calculator.

Furthermore, as shown the signal output by the error detecting code calculator of each functional sub unit is provided to a respective two input OR gate 6852, 6853, 6854, 6855, 6856, each of which receives a further input from the error detecting code calculator output of a preceding functional sub unit and provides its output to an or gate of the next functional sub unit. As shown, OR gate 6852 receives its inputs from error detecting code calculator 6841 and 6842, OR gate 6853 receives its inputs from error detecting code calculator 6843 and OR gate 6852, OR gate 6854 receives its inputs from error detecting code calculator 6844 and OR gate 6853, OR gate 6855 receives its inputs from error detecting code calculator 6845 and OR gate 6854 and OR gate 6856 receives its inputs from error detecting code calculator 6846 and OR gate 6855. Accordingly a logical OR function of all outputs is implemented, such that the output of the logical OR function indicates whether any one of the error detecting code calculators issues an error signal.

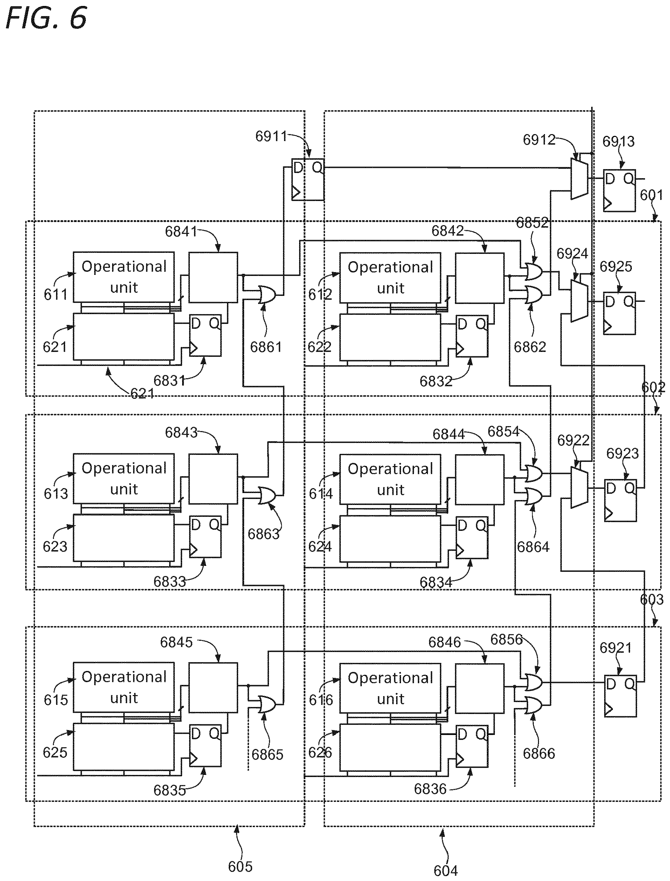

Figure 6 shows a still further configuration for the configuration of FPGA circuitry in accordance with an embodiment. As shown in figure 6, the FPGA is structured around a matrix of functional sub-units each comprising a respective logic block 611, 612, 613, 614, 615, 616. Each logic block is provided with a respective programming shift register 621, 622, 623, 624, 625, 626. As shown each logic block is further associated with a respective error detection storage element 6831, 6832, 6833, 6834, 6835, 6836, each situated at the end of a respective programming shift register 621, 622, 623, 624, 625, 626. As shown each logic block is further associated with a respective error detecting code calculator 6841, 6842, 6843, 6844, 6845, 6846 which operates on the values received from the programming flip-flops and from the check value storage elements as described above.

Clocking and addressing structures for example as described with reference to figure 5 are not shown, but such structures may be provided as necessary.

Furthermore, as shown the signal output by the error detecting code calculator of each functional sub unit is provided to two respective two input OR gate 6861; 6852 and 6862; 6863; 6854 and 6864; 6865; and 6856 and 6866. The first functional sub unit in each row and the first functional sub unit in each column may omit one OR gate since there is no proceeding functional sub unit with which to OR the output. One OR gate in each pair receives a further input from the error detecting code calculator output of a preceding functional sub unit on a horizontal sequence of functional sub units and the other receives a further input from the error detecting code calculator output of a preceding functional sub unit on a vertical sequence of functional sub units, and correspondingly OR gates receiving their further input from the error detecting code calculator output of a preceding functional sub unit on a horizontal sequence of functional sub units provide their output to an OR gate of the next functional sub unit in that horizontal sequence of functional sub units, and OR gates receiving their further input from the error detecting code calculator output of a preceding functional sub unit on a vertical sequence of functional sub units provide their output to an OR gate of the next functional sub unit in that vertical sequence of functional sub units. In this manner, a respective logical OR of the outputs of every functional sub-unit in each row is provided, and a respective logical OR of the outputs of every functional sub-unit in each column is provided. These row and column error values are output to flip-flops forming a row read-out shift register, and flip-flops forming a column read-out shift register.

As shown, on a first row OR gate 6852 receives its inputs from error detecting code calculator 6841 and 6842, on a second row OR gate 6854 receives its inputs from error detecting code calculator 6843 and 6844, and on a third row OR gate 6856 receives its inputs from error detecting code calculator 6845 and 6846. OR gate 6852 provides its output to a multiplexer 6924, OR gate 6854 provides its output to a multiplexer 6922, and OR gate 6856 provides its output to flip-flop 6921. Multiplexer 6922 receives a second input from flip-flop 6921 and provides its output to flip-flop 6923. Multiplexer 6924 receives a second input from flip-flop 6923 and provides its output to flip-flop 6925, whose output provides the row by row read out of error signals.

Similarly, in a first column OR gate 6861 receives its inputs from error detecting code calculator 6841 and OR gate 6863, OR gate 6863 receives its inputs from error detecting code calculator 6843 and OR gate 6865 and OR gate 6865 receives its inputs from error detecting code calculator 6845 and a further functional sub-unit (not shown), and in a second column OR gate 6862 receives its inputs from error detecting code calculator 6842 and OR gate 6864, OR gate 6864 receives its inputs from error detecting code calculator 6844 and OR gate 6866 and OR gate 6866 receives its inputs from error detecting code calculator 6846 and a further functional sub-unit (not shown). OR gate 6861 provides its output to a flip-flop 6911. OR gate 6862 provides its output to a multiplexer 6912. Multiplexer 6912 receives a second input from flip-flop 6911 and provides its output to flip-flop 6913, whose output provides the column by column read out of error signals.

The select lines of the multiplexers 6912, 6924 and 6922 are ganged together so that with a first common select value the respective column/row output values are loaded into the corresponding flip-flops of the output shift register, and with a second common select value the flip-flops of the output shift register are connected as a shift register which may then be clocked to read out the row or column sequence.

If for example an error occurs in the programming values of programming shift register 626, the error detecting code calculator 6846 will determine that there is a discrepancy between the error detection value obtained from the values in programming shift register 626 and the error detection value stored in error detection storage element 6836, and will accordingly output an error signal, which for the sake of the present example may be a logical 1 value. Assuming no other functional sub unit is outputting an error signal, OR gates 6856 and 6866 will receive logical 0 values from the adjacent functional sub units to which they are coupled, but a logical 1 from error detecting code calculator 6846, so that both OR gates 6856 and 6866 will themselves output logical 1 s. The logical 1 output by OR gate 6866 will be propagated through OR gates 6864 and 6862 to reach the input of demultiplexer 6912. Meanwhile, OR gates 6865, 6863 and 6861 will all output logical 0s, which will reach flip-flop 6911.

Meanwhile, OR gate 6856 will output its logical 1 to flip-flop 6921. The OR gates of the first row 6852 and of the second row 6854 will meanwhile output logical 0s to multiplexers 6924 and 6922 respectively.

If the multiplexers are in their first configuration, the logical 0 on OR gate 6852 will pass to flip-flop 6925, the logical 0 on OR gate 6854 will pass to flip-flop 6923 and the logical 1 on OR gate 6856 will pass to flip-flop 6921, so that the row readout flip-flops 6921, 6923, 6925 will contain the values "1,0,0" in sequence, and the column readout flip-flops 6911, 6913 will contain the values "0, 1" in sequence. These sequences may then be read out of the shift registers by toggling the demultiplexers to their second configuration and clocking the shift registers. The resulting values provide a grid reference for the functional sub unit producing an error value.

A variety of remedial measures may then be taken- in some implementations multiple functional units may be configured to perform the same operation, and in the case of an error signal the output of a functional sub unit identified as being in an error condition may be disregarded in favour of an equivalent functional sub unit not in an error condition. Alternatively, the functional sub unit identified as being in an error condition may be re-programmed, for example using an addressing system as described with reference to figure 5.

Accordingly a logical OR function of all outputs is implemented, such that the output of the logical OR function indicates whether any one of the error detecting code calculators issues an error signal.

Accordingly each functional sub unit comprises two OR gates, arranged in a matrix structure, with chains of OR gates combining the outputs whose outputs are combined by a logical OR function belong to a first functional grouping 601 (such as a particular row in the example of figure 6), and where the Field Programmable Gate Array comprises a further plurality of functional groupings 602, 603 of functional sub units (such as the other rows in the example of figure 6), wherein the functional sub units of each functional grouping are arranged linearly within their respective functional grouping, and that the linear arrangements of functional sub units in each functional grouping are parallel to each other, and furthermore wherein a respective functional sub unit of each functional grouping is aligned with a corresponding functional sub unit of each other functional grouping to define a plurality of secondary groupings 604, 605 (such as the respective columns in the example of figure 6) with the functional sub units arranged in a matrix with each functional sub unit belonging to a respective functional grouping and secondary functional grouping (each functional subunit being in a particular row and a particular column), and wherein the signals output by the error detecting code calculator of each functional sub unit are further combined by a second logical OR function with the signal output by the error detecting code calculator of each corresponding respective functional sub unit in each of the secondary functional groupings, such that the output of the second logical OR function indicates whether any one of the error detecting code calculators in a respective the secondary functional grouping issues an error signal, whereby a first logical OR value for a particular functional grouping and whereby a second logical OR value for a particular secondary functional grouping unambiguously indicates the functional unit belonging to that respective functional grouping and whereby that particular secondary functional grouping as the source of the error signal.

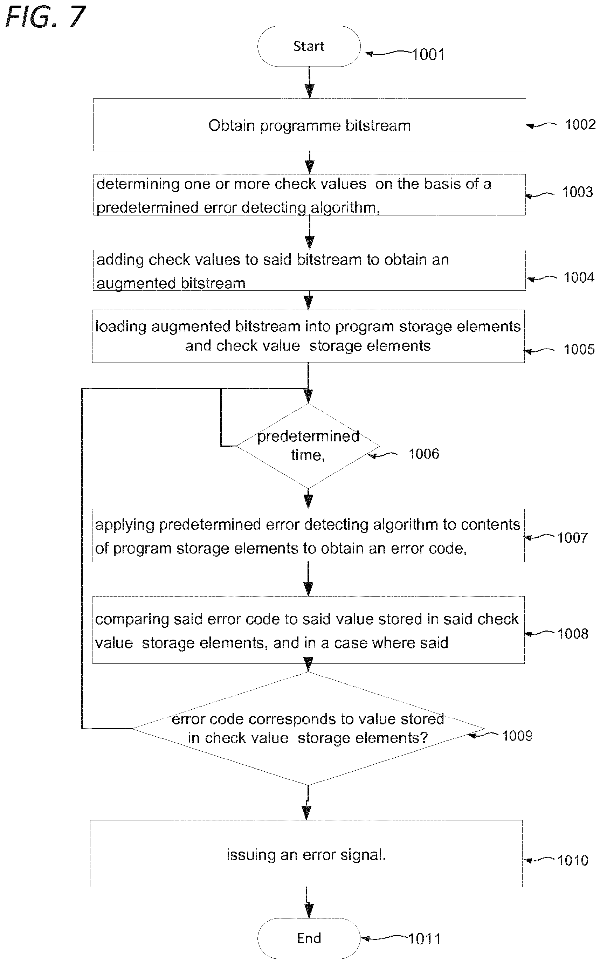

In operation, this arrangement supports a method of testing an FPGA as described with reference to figure 7.

Figure 7 shows a method of operating an FPGA in accordance with an embodiment.

Figure 7 presents a method of operating a Field Programmable Gate Array such as element 3 as described above, capable of implementing a logic function. The Field Programmable Gate Array comprises a plurality of programmable elements such as elements 30, 31 as described above, a plurality of program storage elements such as element 3701, 3702 as described above, each programmable element having at least one programming input coupled to an output of a respective program storage element, such that a value stored in each program storage element determines the operation of the respective programmable element.

As shown in figure 7, the method begins at step 1001 before proceeding at step 1002 to obtain a programme bitstream of values. As described above, loading a respective value from this programme bitstream into a respective program storage element in a predetermined sequence determines the operation of the respective programmable element so as to implement the predetermined logic function. The method then proceeds to step 1003 at which one or more check values are determined for the bitstream on the basis of a predetermined error detecting algorithm, as described above. The method next proceeds to step 1004 at which the check values are added to the bitstream to obtain an augmented bitstream. At step 1005 the augmented bitstream is loaded into the storage elements, comprising program storage elements such as 3701, 3702 etc, and check value storage elements such as 383, whereby the program storage elements receive the respective values of the programme bitstream, and a further one or more check value storage elements receive the respective check values.

The method then loops at step 1006 until it is determined that a predetermined time has been reached. This may be determined on the basis of timing information, or the predetermined time may be whatever time a particular system condition occurs. Once the predetermined time is reached, the method proceeds to step 1007 at which the predetermined error detecting algorithm is applied to the contents of the plurality of program storage elements to obtain an error code. At step 1008 the error code is compared to the value stored in the check value storage elements. If the error code is determined not to correspond to the value stored in the check value storage elements in a predefined manner at step 1009, an error signal is issued at step 1010. Otherwise the method may loop back to step 1006 to await the next predetermined time. The method is shown as terminating at step 1011 after issuing the error signal at step 1010, however the method may then proceed with other remedial steps as described above, and/or loop back to continue monitoring.

The Field Programmable Gate Array may comprise a plurality of functional sub-units, for example as described with reference to figures 5 or 6, whereby the programme bitstream may be associated with a first functional sub-unit, the further functional sub-units being associated with further respective programme bitstreams and corresponding respective check values. The method may then comprise a further step of combining the error signal output by each functional sub-unit by a logical OR function, such that the output of the logical OR function indicates whether any one of the functional sub-units issues an error signal.

Furthermore, the functional sub units whose outputs are combined by a logical OR function may belong to a first functional grouping such as a row, and the Field Programmable Gate Array may comprise a further plurality of functional groupings of functional sub units (for example corresponding to other rows) wherein the functional sub units of each functional grouping are arranged linearly within their respective functional grouping, and the linear arrangements of functional sub units in each functional grouping are parallel to each other, and furthermore wherein a respective functional sub unit of each functional grouping is aligned with a corresponding functional sub unit of each other functional grouping to define a plurality of secondary groupings (corresponding for example to columns) with the functional sub units are arranged in a matrix with each functional sub unit belonging to a respective functional grouping and secondary functional grouping, and wherein the signals output by the error detecting code calculator of each functional sub unit are further combined by a second logical OR function with the signal output by the error detecting code calculator of each corresponding respective functional sub unit in each of secondary functional groupings, such that the output of second logical OR function indicates whether any one of the error detecting code calculators in a respective secondary functional grouping issues an error signal. In this case the method may then comprise the further step of identifying whichever functional sub-unit is associated with both the first logical OR function output and the second logical OR function output as the source of the error signal.

Accordingly in certain embodiments the programmable elements of an FPGA may be configured by loading a programming bitstream into a shift register, associated with additional storage elements containing error detection values calculated on the basis of the programming bitstream. An error checking unit may generate its own digest of the programming bitstream as present in the shift register as required, and compare the result with the error detection values. In a case where the values differ, an error signal may be emitted. Matrixed structures for loading the FPGA with programming bitstream and error detection values on one hand, and reading out error signals on the other are provided.

In some embodiments, the methods and processes described herein may be implemented in whole or part by a computing device. These methods and processes may be implemented by means of computer-application programs or services, an application-programming interface (API), a library, and/or other computer-program product, or any combination of such entities.

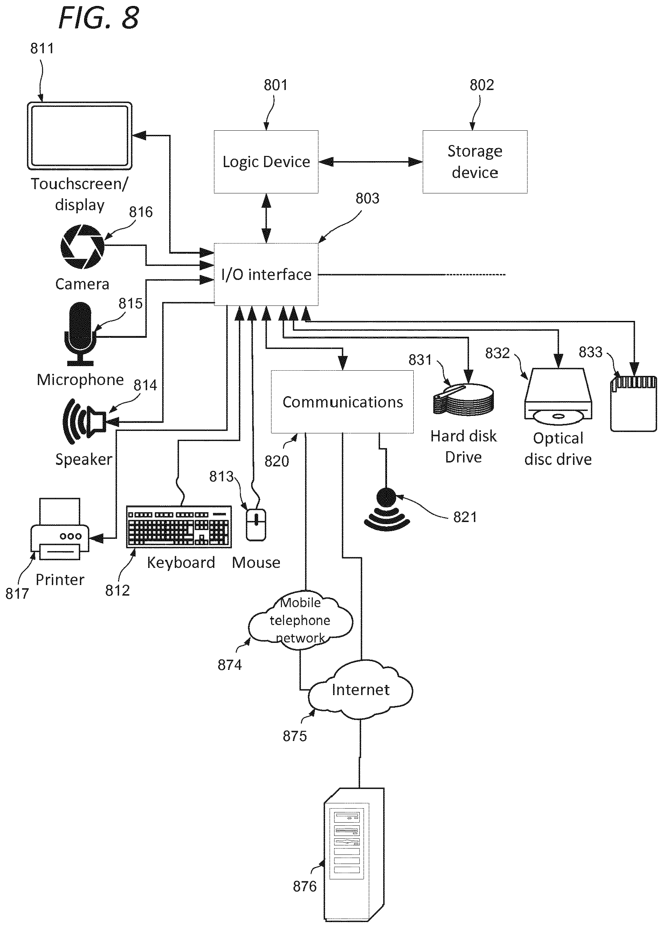

Figure 8 shows a generic computing system suitable for implementation of embodiments of the invention.

A shown in figure 8, a system includes a logic device 801 and a storage device 802. The system may optionally include a display subsystem 1311, input subsystem 812, 813, 815 , communication subsystem 820, and/or other components not shown.

Logic device 801 includes one or more physical devices configured to execute instructions. For example, the logic device 801 may be configured to execute instructions that are part of one or more applications, services, programs, routines, libraries, objects, components, data structures, or other logical constructs. Such instructions may be implemented to perform a task, implement a data type, transform the state of one or more components, achieve a technical effect, or otherwise arrive at a desired result.

The logic device 801 may include one or more processors configured to execute software instructions. Additionally or alternatively, the logic device may include one or more hardware or firmware logic devices configured to execute hardware or firmware instructions. Processors of the logic device may be single-core or multi-core, and the instructions executed thereon may be configured for sequential, parallel, and/or distributed processing. Individual components of the logic device 801 optionally may be distributed among two or more separate devices, which may be remotely located and/or configured for coordinated processing. Aspects of the logic device 801 may be virtualized and executed by remotely accessible, networked computing devices configured in a cloud-computing configuration.

Storage device 802 includes one or more physical devices configured to hold instructions executable by the logic device to implement the methods and processes described herein. When such methods and processes are implemented, the state of storage 802 device may be transformed-e.g., to hold different data.

Storage device 802 may include removable and/or built-in devices. Storage device 802 may comprise one or more types of storage device including optical memory (e.g., CD, DVD, HD-DVD, Blu-Ray Disc, etc.), semiconductor memory (e.g., RAM, EPROM, EEPROM, etc.), and/or magnetic memory (e.g., hard-disk drive, floppy-disk drive, tape drive, MRAM, etc.), among others. Storage device may include volatile, non-volatile, dynamic, static, read/write, read-only, random-access, sequential-access, location-addressable, file-addressable, and/or content-addressable devices.

In certain arrangements, the system may comprise an interface 803 adapted to support communications between the Logic device 801 and further system components. For example, additional system components may comprise removable and/or built-in extended storage devices. Extended storage devices may comprise one or more types of storage device including optical memory 832 (e.g., CD, DVD, HD-DVD, Blu-Ray Disc, etc.), semiconductor memory 833 (e.g., RAM, EPROM, EEPROM, FLASH etc.), and/or magnetic memory 831 (e.g., hard-disk drive, floppy-disk drive, tape drive, MRAM, etc.), among others. Such extended storage device may include volatile, non-volatile, dynamic, static, read/write, read-only, random-access, sequential-access, location-addressable, file-addressable, and/or content-addressable devices.

It will be appreciated that storage device includes one or more physical devices, and excludes propagating signals as such. However, aspects of the instructions described herein alternatively may be propagated by a communication medium (e.g., an electromagnetic signal, an optical signal, etc.), as opposed to being stored on a storage device.

Aspects of logic device 801 and storage device 802 may be integrated together into one or more hardware-logic components. Such hardware-logic components may include field-programmable gate arrays (FPGAs), program- and application-specific integrated circuits (PASIC/ASICs), program- and application-specific standard products (PSSP/ASSPs), system-on-a-chip (SOC), and complex programmable logic devices (CPLDs), for example.

The term "program" may be used to describe an aspect of computing system implemented to perform a particular function. In some cases, a program may be instantiated via logic device executing machine-readable instructions held by storage device. It will be understood that different modules may be instantiated from the same application, service, code block, object, library, routine, API, function, etc. Likewise, the same program may be instantiated by different applications, services, code blocks, objects, routines, APIs, functions, etc. The term "program" may encompass individual or groups of executable files, data files, libraries, drivers, scripts, database records, etc.

In particular, the system of figure 8 may be used to implement embodiments of the invention.

For example a program implementing the steps described with respect to figures 7 may be stored in storage device 802 and executed by logic device 801. The bitstream loaded into the shift register or registers may be generated by the logic device 801 and/or stored in storage device 802 or the extended storage devices 832, 833 or 831. The error detection algorithm may be stored in storage device 802 and executed by logic device 801 on the bitstream. The resulting Error Detection values may be stored in storage device 802 and concatenated or otherwise combined with the bitstream to form the augmented bitstream by logic device 801 operating on the contents of storage device 802. The bitstream may be loaded into the shift register or registers by the action of the logic device 801 via the communications interface 820. The bitstream read from the shift register or registers may be retrieved by the action of the logic device 801 via the communications interface 820, and/or stored in storage device 802 or the extended storage devices 832, 833 or 831. The Logic device 801 may retrieve the bitstream loaded to the shift register or registers, and the bitstream read from the shift register or registers in the verification mode, and perform a comparison to determine validity of results.

Accordingly the invention may be embodied in the form of a computer program.

It will be appreciated that a "service", as used herein, is an application program executable across multiple user sessions. A service may be available to one or more system components, programs, and/or other services. In some implementations, a service may run on one or more server-computing devices.

When included, display subsystem 811 may be used to present a visual representation of data held by storage device. This visual representation may take the form of a graphical user interface (GUI). As the herein described methods and processes change the data held by the storage device 802, and thus transform the state of the storage device 802, the state of display subsystem 811 may likewise be transformed to visually represent changes in the underlying data. Display subsystem 811 may include one or more display devices utilizing virtually any type of technology. Such display devices may be combined with logic device and/or storage device in a shared enclosure, or such display devices may be peripheral display devices.

When included, input subsystem may comprise or interface with one or more user-input devices such as a keyboard 812, mouse 813, touch screen 811, or game controller (not shown). In some embodiments, the input subsystem may comprise or interface with selected natural user input (NUI) componentry. Such componentry may be integrated or peripheral, and the transduction and/or processing of input actions may be handled on- or off-board. Example NUI componentry may include a microphone for speech and/or voice recognition; an infrared, colour, stereoscopic, and/or depth camera for machine vision and/or gesture recognition; a head tracker, eye tracker, accelerometer, and/or gyroscope for motion detection and/or intent recognition; as well as electric-field sensing componentry for assessing brain activity.

When included, communication subsystem 820 may be configured to communicatively couple computing system with one or more other computing devices. For example, communication module of may communicatively couple computing device to remote service hosted for example on a remote server 876 via a network of any size including for example a personal area network, local area network, wide area network, or the internet. Communication subsystem may include wired and/or wireless communication devices compatible with one or more different communication protocols. As non-limiting examples, the communication subsystem may be configured for communication via a wireless telephone network 874, or a wired or wireless local- or wide-area network. In some embodiments, the communication subsystem may allow computing system to send and/or receive messages to and/or from other devices via a network such as the Internet 875. The communications subsystem may additionally support short range inductive communications 821 with passive devices (NFC, RFID etc).

According to certain embodiments, configuration values for Lookup tables (LUTs) and programmable routing switches in an FPGA are provided by means of a number of flip-flops arranges in a shift register. This shift register may receive test values in a factory test mode, and operational configuration values (implementing whatever functionality the client requires of the FPGA) in an operational mode. The bitstreams are provided at one end of the shift register, and clocked through until the last flip-flop receives its value. Values may also be clocked out at the other end of the shift register to be compared to the initial bitstream in order to identify corruption of stored values e.g. due to radiation exposure. A clock gating architecture is proposed for loading data to or reading data from specific selected shift registers.

It will be understood that the configurations and/or approaches described herein are exemplary in nature, and that these specific embodiments or examples are not to be considered in a limiting sense, because numerous variations are possible. The specific routines or methods described herein may represent one or more of any number of processing strategies. As such, various acts illustrated and/or described may be performed in the sequence illustrated and/or described, in other sequences, in parallel, or omitted. Likewise, the order of the above-described processes may be changed.

The subject matter of the present disclosure includes all novel and non-obvious combinations and sub-combinations of the various processes, systems and configurations, and other features, functions, acts, and/or properties disclosed herein, as well as any and all equivalents thereof.

## Claims

1. A Field Programmable Gate Array capable of implementing a logic function, said Field Programmable Gate Array comprising a plurality of programmable elements, and a plurality of program storage elements, each said programmable element having at least one programming input coupled to an output of a respective said program storage element, such that a value stored in each said program storage element determines the operation of the respective said programmable element, said Field Programmable Gate Array being **characterised by** further comprising one or more check value storage elements, and an error detecting code calculator, said output of each said program storage element being further coupled to said error detecting code calculator, whereby said error detecting code calculator is configured to calculate an error code in accordance with a predefined error detecting algorithm, and to compare said error code with a value stored in said check value storage elements, and in a case where said error code does not correspond to said value stored in said check value storage elements in a predefined manner, said error detecting code calculator is further adapted to issue an error signal.

2. The Field Programmable Gate Array of claim 1 in which said program storage elements and said check value storage elements are flip-flops.

3. The Field Programmable Gate Array of claim 1 in which said program storage elements and said check value storage elements are arranged to form a shift register.

4. The Field Programmable Gate Array of claim 1 in which said predefined error detecting algorithm is any one of a parity value, checksum, cyclic redundancy check, cryptographic hash function or error correcting code.

5. The Field Programmable Gate Array of any preceding claim in which said predefined manner of correspondence is identity of said error code with said value stored in said check value storage elements.

6. The Field Programmable Gate Array of any preceding claim wherein said plurality programmable elements and associated said plurality of program storage elements and program storage elements, check value storage elements and error detecting code calculator belong a functional sub unit of said Field Programmable Gate Array, and wherein said Field Programmable Gate Array comprises a further plurality of functional sub units, each said further functional sub unit comprising respective program storage elements and program storage elements, check value storage elements and error detecting code calculator.

7. The Field Programmable Gate Array of claim 6 wherein the signal output by the error detecting code calculator of each said functional sub unit are combined by a logical OR function, such that the output of said logical OR function indicates whether any one of said error detecting code calculators issues an error signal.

8. The Field Programmable Gate Array of claim 7 wherein said functional sub units whose outputs are combined by a logical OR function belong to a first functional grouping, and where said Field Programmable Gate Array comprises a further plurality of functional groupings of functional sub units in accordance with claim 7, wherein the functional sub units of each said functional grouping are arranged linearly within their respective functional grouping, and that the linear arrangements of functional sub units in each said functional grouping are parallel to each other, and furthermore wherein a respective functional sub unit of each functional grouping is aligned with a corresponding functional sub unit of each other functional grouping to define a plurality of secondary groupings with the functional sub units are arranged in a matrix with each functional sub unit belonging to a respective functional grouping and secondary functional grouping, and wherein the signals output by the error detecting code calculator of each said functional sub unit are further combined by a second logical OR function with the signal output by the error detecting code calculator of each said corresponding respective functional sub unit in each of said secondary functional groupings, such that the output of said second logical OR function indicates whether any one of said error detecting code calculators in a respective said secondary functional grouping issues an error signal, whereby a first logical OR value for a particular functional grouping and whereby a second logical OR value for a particular secondary functional grouping unambiguously indicates the functional unit belonging to that respective functional grouping and whereby that particular secondary functional grouping as the source of the error signal.

9. A method of operating a Field Programmable Gate Array capable of implementing a logic function, said Field Programmable Gate Array comprising a plurality of programmable elements, said Field Programmable Gate Array comprising a plurality of program storage elements, each said programmable element having at least one programming input coupled to an output of a respective program storage element, such that a value stored in each said program storage element determines the operation of the respective said programmable element, said method comprising the steps of:
obtaining a programme bitstream of values whereby loading a respective value from said programme bitstream into a respective said program storage element in a predetermined sequence will determine the operation of the respective said programmable element so as to implement a predetermined said logic function,
determining one or more check values for said bitstream on the basis of a predetermined error detecting algorithm,
adding said check values to said bitstream to obtain an augmented bitstream,
loading said augmented bitstream into a plurality of storage elements, whereby said program storage elements receive the respective values of said programme bitstream, and a further one or more check value storage elements receive the respective said check values, and
at a predetermined time, applying said predetermined error detecting algorithm to the contents of said plurality of program storage elements to obtain an error code, and comparing said error code to said value stored in said check value storage elements, and in a case where said error code does not correspond to said value stored in said check value storage elements in a predefined manner, issuing an error signal.

10. The method of claim 9 in which said predefined error detecting algorithm is any one of a parity value, checksum, cyclic redundancy check, cryptographic hash function or error correcting code.

11. The method of any of claims 9 or 10 in which said predefined manner of correspondence is identity of said error code with said value stored in said check value storage elements.

12. The method of any of claims 9 to 11 wherein said Field Programmable Gate Array comprises a plurality of functional sub-units, and said programme bitstream is associated with a first said functional sub-unit, the further said functional sub-units being associated with further respective programme bitstreams and corresponding respective check values, said method comprising the further step of combining the error signal output by each said functional sub-unit by a logical OR function, such that the output of said logical OR function indicates whether any one of said functional sub-units issues an error signal.

13. The method of claim 12 wherein said functional sub units whose outputs are combined by a logical OR function belong to a first functional grouping, and where said Field Programmable Gate Array comprises a further plurality of functional groupings of functional sub units in accordance with claim 12, wherein the functional sub units of each said functional grouping are arranged linearly within their respective functional grouping, and that the linear arrangements of functional sub units in each said functional grouping are parallel to each other, and furthermore wherein a respective functional sub unit of each functional grouping is aligned with a corresponding functional sub unit of each other functional grouping to define a plurality of secondary groupings with the functional sub units are arranged in a matrix with each functional sub unit belonging to a respective functional grouping and secondary functional grouping, and wherein the signals output by the error detecting code calculator of each said functional sub unit are further combined by a second logical OR function with the signal output by the error detecting code calculator of each said corresponding respective functional sub unit in each of said secondary functional groupings, such that the output of said second logical OR function indicates whether any one of said error detecting code calculators in a respective said secondary functional grouping issues an error signal,
said method comprising the further step of identifying whichever said functional sub-unit is associated with both the first logical OR function output and the second logical OR function output as the source of the error signal.

14. A computer program adapted to implement the steps of any of claims 9 to 13.

15. A computer readable medium incorporating the computer program of claim 14.
